(19) Europäisches Patentamt

European Patent Office

Office européen des brevets

(11) **EP 1 486 254 A1**

(12) **EUROPEAN PATENT APPLICATION**

(43) Date of publication:
**15.12.2004 Bulletin 2004/51**

(51) Int Cl.[7]: **B01J 20/18**, B01D 53/02,
B01J 29/08, C01B 39/22

(21) Application number: **04076623.0**

(22) Date of filing: **03.06.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **09.06.2003 US 457807**

(71) Applicants:
• **Generon IGS, Inc.**
  **Houston, Texas 77041 (US)**
• **Tricat Zeolites GmbH**
  **06749 Bitterfeld (DE)**

(72) Inventors:
• **Straub, Marc**
  **Tomball, Texas 77377 (US)**

• **Pearce, John**
  **Cos Cob, Connecticut 06807 (US)**
• **Hofmann, Ulrich**
  **73240 Wendlingen (DE)**
• **Toufar, Helge**
  **06844 Dessau (DE)**
• **Lohr, Marcus**
  **70329 Sttutgart (DE)**

(74) Representative: **Barker, Rosemary Anne et al**
  **Harrison, Goddard, Foote,**
  **11c Compstall Road,**
  **Marple Bridge,**
  **Stockport SK6 5HH (GB)**

(54) **Molecular sieve with enhanced performance in air separation**

(57)    A molecular sieve is made by reacting an ammonium-exchanged low silica X-type zeolite precursor with lithium hydroxide, at a pressure of about 200 millibar or less, and at a temperature of about 60° or less. The zeolite precursor is preferably an X-type zeolite, in which the silicon to aluminum atomic ratio is less than about 1.02. The lithium is provided in an amount which is stoichiometrically equivalent to the amount of ammonium present. The molecular sieve is especially useful in separating air into components using PSA or VPSA processes, and has improved productivity and yield as compared with materials of the prior art. The advantages of the molecular sieve enable it to be provided in the form of beads having relatively large diameter, which reduces the pressure drop across the adsorber bed, and reduces required energy consumption.

EP 1 486 254 A1

**Description**

FIELD OF THE INVENTION

The present invention relates to the use of a novel molecular sieve with enhanced performance in the separation of nitrogen and oxygen by pressure swing adsorption processes. The molecular sieve is obtained by reacting lithium hydroxide with the ammonium form of a low silica X-type precursor, resulting in a product with novel structure and improved adsorption properties.

BACKGROUND OF THE INVENTION

The production of highly concentrated oxygen by the physical separation of air using Pressure Swing Adsorption (PSA) or by Vacuum Pressure Swing Adsorption (VPSA) processes is one of the major technical sources of this industrial gas. The adsorbents used for this application are zeolitic molecular sieves in the majority of cases, mostly of the general A-type and X-type.

The effect of zeolites in the process has heretofore been assigned to the strong and specific interaction of zeolitic cations with the quadrupole moment of the nitrogen molecule. This results in the preferential adsorption of nitrogen from air, allowing the purified oxygen product to pass through the absorber vessel, to be collected at the outlet as the desired product.

Historically, sodium exchanged X-type zeolites and calcium exchanged A-type zeolites have been utilized as adsorbents for air separation. Their selectivity and performance, however, are rather poor by contemporary standards. In recent years, lithium containing zeolites of X-type structure have gained increasing market share due to their superior performance in the PSA process for oxygen purification. For example, U.S. Patent No. 3,140,933 discloses the use of a partially lithium exchanged X-type molecular sieve. Better separation performance was also reported in U.S. Patent No. 4,859,217 when the amount of lithium in an X-type zeolite was equal to or greater than 88% of all exchangeable cations. More recently, it has been asserted that equally good or better performance can be achieved when part of the lithium is replaced by higher valent cations.

For example, U.S. Patent No. 5,417,957 teaches that X-type molecular sieves having lithium in combination with copper, cobalt or chromium enjoy high performance. U.S. Patent No. 5,419,891 describes similar advantages for X-type zeolites exchanged with combinations of lithium and zinc. U.S. Patent No. 5,464,467 discloses a novel molecular sieve with enhanced performance and thermal stability that, in addition to lithium, contains trivalent cations like lanthanum, cerium, aluminum, or iron. The disclosures of all of the above-cited patents are hereby incorporated by reference.

It is generally believed that only a small fraction of the lithium cations which are present in contemporary adsorbents are actually involved in the adsorption process, and that only this small fraction has the required accessibility and vacant coordination to serve as a selective adsorption site for nitrogen. The strength of adsorption, and more specifically the relative adsorption selectivity for different gas molecules depend obviously on a highly localized structural environment of the lithium cations as provided by the local supporting structure.

Numerous attempts have been made to optimize the utilization of lithium by modifying the supporting structure. Yoshida et al., in Microporous and Mesoporous Materials, volume 46, pages 203-209 (2001), describe a substantial increase in nitrogen adsorption capacity when the characteristic cubic crystal structure of a lithium exchanged X-type precursor is transformed to a structurally distinct orthorhombic material.

This phenomenon was only observed, however, at extremely low temperatures.

The orthorhombic material was not stable at process-typical temperatures, and therefore deemed not applicable to technical PSA or VPSA processes.

Other recent work to increase the efficiency of lithium utilization has included straightforward attempts to increase the volume density of support sites for the lithium cations within the adsorbent particles. U.S. Patent No. 5,962,358, for example, the disclosure of which is incorporated by reference herein, describes a binderless formulation of lithium-containing molecular sieves, including A-type and X-type. Still more recent patents have claimed the benefits of a low silica X-type zeolite with a silicon to aluminum ratio of 1.0. This particular zeolite, known as LSX, possesses the maximum possible number of cationic sites for this specific structure type.

In most cases, a high degree of lithium exchange is achieved by conventional methods as described, for example, in Breck, "Zeolite Molecular Sieves", Wiley, New York, 1973. Because of the unfavorable exchange selectivity of the lithium ion, the introduction of lithium into adsorbents is normally quite difficult. Large excesses of lithium salts and high temperatures, preferably in combination with elevated pressure, traditionally need to be applied. However, U.S. Patent No. 5,916,836, the disclosure of which is incorporated by reference herein, teaches methods to achieve complete lithium exchange by reacting the ammonium forms of zeolites with stoichiometric amount of lithium hydroxide.

While these approaches may indeed increase the quantity of lithium which can be incorporated in an adsorbent body, they do not necessarily increase the amount or fraction of lithium moieties present in the specific environments necessary to be beneficial to the adsorption process, nor do they increase the efficiency of lithium utilization. And in spite of the commercial significance of these adsorbents, little is known of the identity or characteristics of the unique environment of lithium which gives rise to its beneficial performance in the selective adsorption of nitrogen from air.

## SUMMARY OF THE INVENTION

The present invention relates to the manufacture of a lithium containing molecular sieve with superior properties for the separation of air by Pressure Swing Adsorption processes. The manufacturing process starts from an ammonium exchanged low silica X (LSX) type zeolite precursor. This zeolite is reacted with a stoichiometric amount of lithium hydroxide under specific conditions of low pressure and low temperature.

Surprisingly it has been found that if the treatment with lithium hydroxide takes place at pressures of 200 millibar or lower, and at temperatures of 60° C or lower, the resulting lithium containing material exhibits unusual structural features that are significantly different from the zeolites described in the prior art. Even more surprisingly it was found that the material produced using this special sequence of techniques exhibits superior performance in air separation by Pressure Swing Adsorption (PSA) or by Vacuum pressure Swing Adsorption (VPSA).

The present invention therefore has the primary object of providing a method of making a molecular sieve that is useful in the separation of air into components.

The invention has the further object of providing a molecular sieve useful in the separation of air into components.

The invention has the further object of providing a molecular sieve that exhibits a significantly higher adsorption capacity for nitrogen at partial pressures higher than about 1000 millibar, as compared with prior art materials.

The invention has the further object of providing a molecular sieve having improved productivity and yield when used in PSA and VPSA processes.

The invention has the further object of providing a molecular sieve which may be provided in the form of relatively large diameter beads, thereby reducing the pressure drop across the adsorber bed, and reducing energy consumption of the machinery used to convey gas through the system.

The invention has the further object of providing a molecular sieve which has a relatively fast adsorption rate, and in which the cycle time of the process is thereby reduced.

The invention has the further object of providing a molecular sieve which provides superior performance in PSA processes with adsorption at super-atmospheric pressures and regeneration at ambient pressure.

The invention has the further object of providing a molecular sieve having a reduced level of vacuum required for efficient regeneration.

The invention has the further object of providing a molecular sieve having improved working capacity.

The invention has the further object of providing an improved method of separating air into components, through the use of the molecular sieve described above.

The reader skilled in the art will recognize other objects and advantages of the invention, from a reading of the following brief description of the drawings, the detailed description of the invention, and the appended claims.

## BRIEF DESCRIPTION OF THE DRAWINGS

Figures 1a and 1b provide graphs representing X-ray diffraction patterns relating, respectively, to the novel lithium-containing material made by the present invention, and the starting material NH4-LSX (b).

Figures 2a, 2b, and 2c provide graphs of the 29Si-MAS-NMR spectrum of the novel material (Fig. 2c) compared to the equivalent spectrum of Li-LSX obtained by conventional ion exchange (Fig. 2b) and a standard Li-X (Fig. 2a) with a silicon to aluminum ratio of 1.17.

Figure 3 provides a graph showing oxygen and nitrogen adsorption isotherms of a novel material made according to Example 3 of the present invention and a comparative material made according to the prior art

(Example 4).

Figure 4 provides a graph showing the nitrogen working capacity of a novel material made according to Example 3 of the present invention and a comparative material made according to the prior art (Example 4).

Figure 5 provides a graph showing the performance in a vacuum swing air separation process, performance being defined by oxygen yield and oxygen productivity, of a novel material made according to Examples 1 and 3 of the present invention, and a comparative material made according to the prior art (Examples 2 and 4) and measured under the conditions given in Example 5.

DETAILED DESCRIPTION OF THE INVENTION

The present invention comprises the manufacture of a lithium exchanged molecular sieve with novel structural features and an enhanced nitrogen adsorption capacity, that can be used beneficially in the production of adsorbents with superior performance in the separation of air by Pressure Swing Adsorption (PSA) or by Vacuum Pressure Swing Adsorption (VPSA) processes.

The novel molecular sieve is obtained by treating a partially or fully ammonium exchanged X-type zeolite, most preferably with a silicon to aluminum atomic ratio of less than 1.02, with a quantity of lithium hydroxide solution which is stoichiometrically equivalent to the amount of ammonium present, under specific conditions of low temperature and low pressure. In the prior art, this exchange reaction has been performed at elevated temperatures in order to facilitate the removal of ammonia evolved from the reaction zone, and thereby to improve the rate and completeness of the reaction. Temperatures reported for example in U.S. Patent Nos.5,916,837 and 6,407,025, the disclosures of which are incorporated by reference herein, have been close to the boiling point of water, and at least higher than 90° C. If, however, a reduced pressure is applied in the reaction vessel, the same effect can be achieved at significantly lower temperatures. By reducing the reaction system pressure to 200 millibar or below, reaction temperatures of 60° C or lower can be successfully used.

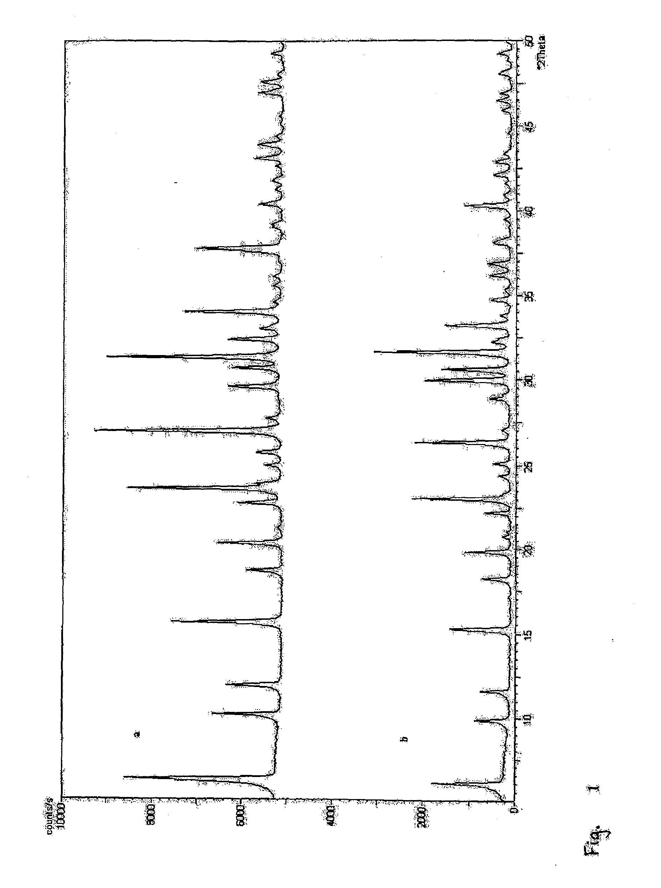

This low temperature, low pressure treatment results in immediate and complete exchange of lithium ions for ammonium ions in the material. Additionally, during this exchange process, indications of dramatic structural modifications are observed. Notably, a physical contraction occurs, reducing the size of the cubic unit cell from 25.20 angstroms to 24.65 angstroms, as illustrated by the peak shift in the X-ray diffraction patterns shown in Figure 1.

It has also been found, surprisingly, that when the treatment as described is performed under such conditions, for example, at temperatures below 60° C and reaction pressures below 200 millibar, the resulting lithium molecular sieve exhibits novel structural features that are distinctly different from those described in the prior art.

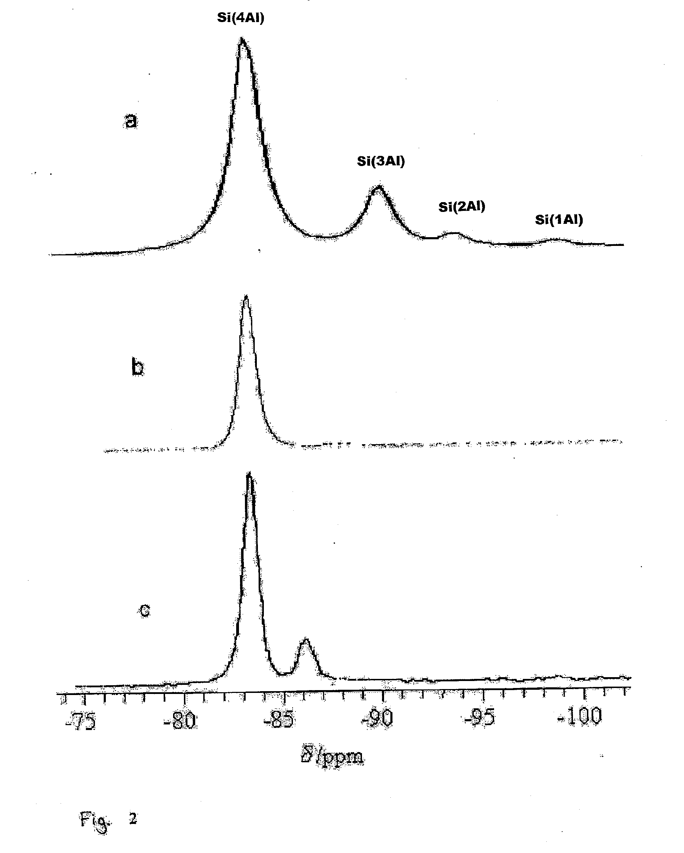

The local structure of the novel material appears to be significantly different as compared to a lithium zeolite of similar composition, and as produced by conventional ion exchange procedures. This is demonstrated by the high resolution 29-Si-MAS-NMR spectra presented in Figures 2a-2c, explained in the following paragraphs.

Figure 2a provides an NMR spectrum of a lithium X-type zeolite having a higher silicon to aluminum ratio, namely 1.17, than is preferred in the present invention. Figure 2b provides a comparable NMR spectrum of a prior art lithium LSX-type in which the silicon to aluminum ratio is less than 1.02, as in the product of the present invention, but in which the material has not been produced using the inventive method. Figure 2c provides the NMR spectrum of a material produced according to the present invention.

While the comparative material (Figure 2b) produced by conventional ion exchange procedures exhibits only one signal representing a single species of silicon surrounded by four O-Al-groups, the novel material (Figure 2c) exhibits an additional signal with a shift of 3 ppm relative to the main signal. Based on the intensity of this signal, it is estimated that 10-15% of the silicon present in the novel material is in this unique form. To those skilled in the art, this is a clear indication that the extraordinary signal at 3 ppm displayed by the material made according to the present invention cannot be attributed to zeolitic silicon having one or more atoms of silicon in its second shell of coordination. Such zeolite materials would be expected to display a relative shift of at least 8 ppm.

For comparison, Figure 2a shows the NMR spectrum of a lithium X-type zeolite with a higher silicon to aluminum ratio, namely 1.17, than is preferred in the present invention. This figure shows the full suite of signals at positions which are characteristic of X-type zeolites in general, and further demonstrates, clearly, that the new signal at 3 ppm, in Figure 2c, does not arise from a zeolitic material, but instead arises from a different phase entirely.

Since the X-ray diffraction pattern excludes the presence of other zeolitic materials that could explain such a sharp second signal with only 3 ppm relative shift, it is believed that a local disruption of the zeolite lattice has occurred, and that the presence of a non-zeolitic phase is the source of the signal at 3 ppm. The material giving rise to this signal cannot be characterized as zeolitic. And as concluded above, 10-15% of the total silicon atoms are found in the novel material produced by this special ion exchange procedure, and by inference 10-15% of the total lithium.

Furthermore, surprisingly, it was found that the adsorbent prepared according to the present invention exhibits a significantly higher adsorption capacity for nitrogen at partial pressures higher than 1 bar, while the nitrogen adsorption capacity at partial pressures lower than 0.5 bar is slightly lower. Both of these are desirable characteristics. Therefore, the adsorption characteristics of the novel material disclosed herein are favorable as compared with those of zeolite adsorbents made by conventional methods of lithium exchange, i.e., by repeated treatment of X-type zeolites with lithium chloride solution, or by materials prepared by ammonium replacement by lithium hydroxide, but at high temperatures and pressures, i.e. those that do not show the observed unique phase characterized by the NMR signal at 3 ppm.

Without being bound by any theory, it is believed that the structural disruption and the appearance of the novel phase or environment occurs during the fast and substantial contraction of the zeolite structure. This contraction is brought about by the special ion exchange procedure described herein, and this phase can only be conserved, or "frozen", if the process is performed at low temperatures. If higher temperatures are applied, the structure will have the opportunity to relax or anneal, or the novel phase may not be formed at all. The improved nitrogen adsorption capacity and more ideal adsorption characteristics may be attributed to lithium ions that are exposed in a different way when supported on or incorporated in this novel phase, and therefore exhibit a different pressure dependence of interaction than adsorption centers in a completely relaxed structure. Dynamic adsorption tests confirm the static adsorption results, and demonstrate improved kinetics for the adsorption and desorption of nitrogen. These improved kinetic parameters are also attributable to more exposed or optimally coordinated lithium.

According to the present invention the increased adsorption capacity and better adsorption kinetics of the material made according to the present invention can be utilized for the production of an adsorbent with superior performance in VPSA (vacuum pressure swing adsorption) processes and also PSA (pressure swing adsorption) processes for the separation of oxygen and nitrogen from air.

There are two characteristic numbers for describing the performance of zeolites in PSA and VPSA processes, defined as follows:

Productivity is the amount of oxygen produced per kilogram of adsorbent per hour, as defined by Equation (1), in which $V_P$ is the volume of total product per hour, $y_{O2}$ is the volume fraction of oxygen in the total product, and $m_A$ is the mass of adsorbent in the system. Productivity is expressed in normal liters of oxygen per hour per kilogram of adsorbent.

$$\text{Productivity} = V_P \cdot y_{O2}/m_A \qquad \text{Equation (1)}$$

The second characteristic is yield, which is the ratio of the amount of oxygen in the product gas to the amount in the feed gas, as defined by Equation (2), in which $V_F$ is the volume of total feed per hour, and $y_F$ is the volume fraction of oxygen in the feed. Yield is expressed in volume percent.

$$\text{Yield} = V_P \cdot y_{O2}/V_F \cdot y_F \qquad \text{Equation (2)}$$

Productivity is important in determining the required amount of adsorbent and the required size of the adsorber vessels, and therefore indicates the investment costs of a commercial installation. Yield specifies the energy efficiency of the plant operation and the size of some of the support machinery, for example, air compressors, air blowers, or vacuum pumps. The use of the novel adsorbent described in this invention leads to higher Productivity and Yield in PSA and VPSA processes, and will therefore benefit both investment and operating costs.

The following illustrative examples will serve to demonstrate that the novel adsorbent described in the invention has preferential adsorption kinetics compared with prior art Li-LSX molecular sieves. This results in a better Productivity and Yield, especially for a high product purity. It is therefore possible to use larger diameter beads of the new adsorbent compared to the prior art Li-LSX zeolite, while still attaining similar kinetic performance. The use of such bigger beads results in a lower pressure drop of the adsorber bed, thereby reducing the energy consumption of the machinery, as for example, the air blower and the vacuum pump of a VPSA process.

Another desirable option which is enabled by the faster adsorption kinetics of the new adsorbent is a reduction of the cycle time of the processes. It is well known to those skilled in the art that shorter cycles leads to a higher Productivity, but cycle time is limited by increasing pressure drop. However, the bigger beads enabled by the novel adsorbent described in this invention will relieve the higher pressure drop limit at shorter cycle times. Therefore the use of the novel lithium adsorbent in VPSA and PSA processes will allow additional reductions in energy requirements.

Example 1

An adsorbent according to the present invention was prepared as follows. 2.1 dry metric tons of NH4-LSX powder were slurried in 11 metric tons of water. The slurry was then transferred into a vacuum proof, vigorously agitated vessel. The gas pressure in the vessel was reduced to 150 millibar and the temperature adjusted to 45° C. 6.2 metric tons of a lithium hydroxide solution containing 5.0 weight % LiOH were then added within 10 minutes under continuous stirring. The temperature, pressure and stirring conditions were held constant for another 20 minutes. After that, the slurry was filtered and the material washed with 10 tons of demineralized water per ton of solids. The product was finally dried at 120° C. The composition of the starting material and the resulting product are listed in Table 1. Equilibrium adsorption data for nitrogen are given in Table 2. The NMR spectrum for the material prepared according to Example 1 is depicted in Figure 2c.

Example 2

This Example comprises prior art technology, and is used for purposes of comparison with the present invention.
The Li-LSX was prepared as follows. 5.0 dry kilograms of conventional Na,K-LSX zeolite were treated with 12 kilograms of a lithium chloride aqueous solution containing 10 weight % LiCl in a stirred vessel for 2 hours at 95° C and ambient pressure. Afterwards, the material was filtered and washed with demineralized water at a ratio of 10 kilograms of water per kilogram of solid. These steps had to be repeated three times with fresh lithium chloride solution to achieve a degree of lithium exchange equivalent to that in Example 1. The material was dried at 120° C, as in Example 1. The composition of the starting material and the resulting Li-LSX are given in Table 1. Adsorption equilibrium data for nitrogen are provided in Table 2. The comparative NMR spectrum for the material prepared according to Example 2 is depicted in Figure 2b.

Table 1

| Chemical composition of powders from Examples 1 and 2. Values reported are in weight %, normalized to analysis after an ignition pretreatment at 900° C. | | | | |
|---|---|---|---|---|
| | Novel Adsorbent (Example 1) | | Prior Art Zeolite (Example 2) | |
| | Starting Material[1] | Product Material | Starting Material | Product Material |
| $SiO_2$ | 54.0% | 47.8% | 42.3% | 47.7% |
| $Al_2O_3$ | 45.3% | 40.2% | 35.5% | 40.1% |
| $Li_2O$ | - | 11.4% | - | 11.5% |
| $Na_2O$ | 0.3% | 0.2% | 21.2% | 0.5% |
| $K_2O$ | 0.4% | 0.4% | 1.0% | 0.2% |
| $(NH_4)_2O$ | 22.0% | - | - | - |

[1]$(NH_4)_2O$ is decomposed during ROI 900°C procedure; therefore, the sum exceeds 100%.

The data in Table 1 show that the superficial chemical composition of the novel adsorbent is equivalent to that of the prior art zeolite.

Table 2

| Adsorption equilibrium data for powders from Examples 1 and 2 | | |
|---|---|---|
| (Nitrogen adsorption at equilibrium, expressed in normal liters per kilogram) | | |
| Novel Adsorbent (Example 1) | | Prior Art Zeolite (Example 2) |
| 300 millibar | 10.7 | 11.5 |
| 500 millibar | 16.1 | 16.7 |
| 700 millibar | 20.5 | 20.9 |
| 1000 millibar | 26.0 | 26.0 |
| 1400 millibar | 31.8 | 31.3 |
| 2000 millibar | 38.4 | 37.3 |
| 3000 millibar | 46.3 | 44.6 |

The data in Table 2 show that the nitrogen adsorption capacity of the novel adsorbent is significantly higher than that of the prior art zeolite in the regions of higher applied pressure, specifically at applied pressures above 1000 millibar. The data further show that the amount of adsorbed nitrogen on the novel adsorbent is lower than that on the prior art zeolite in the regions of lower applied pressure, specifically at applied pressures below 1000 millibar. Both of these characteristics are desirable.

Example 3

The novel adsorbent of the present invention was incorporated into beads typical of those utilized in industrial applications as follows. 4.0 dry kilograms of the material produced according to Example 1 were mixed thoroughly with 1.0 kilogram of a conventional attapulgite binder for 1 hour. After adding the required quantity of water to induce granulation, the mixture was granulated using an intensive mixer to produce spherical beads of 1 to 4 millimeter diameter. The beads were activated by careful heating in a flow of 20,000 liters (STP) per hour of dry nitrogen at 550° C for 3 hours. Nitrogen working capacities of this material are shown in Table 3. The nitrogen working capacity is defined as the difference in the amount of nitrogen adsorbed at 0.8 x adsorption pressure and the amount of nitrogen adsorbed at 0.8 x desorption pressure.

Example 4

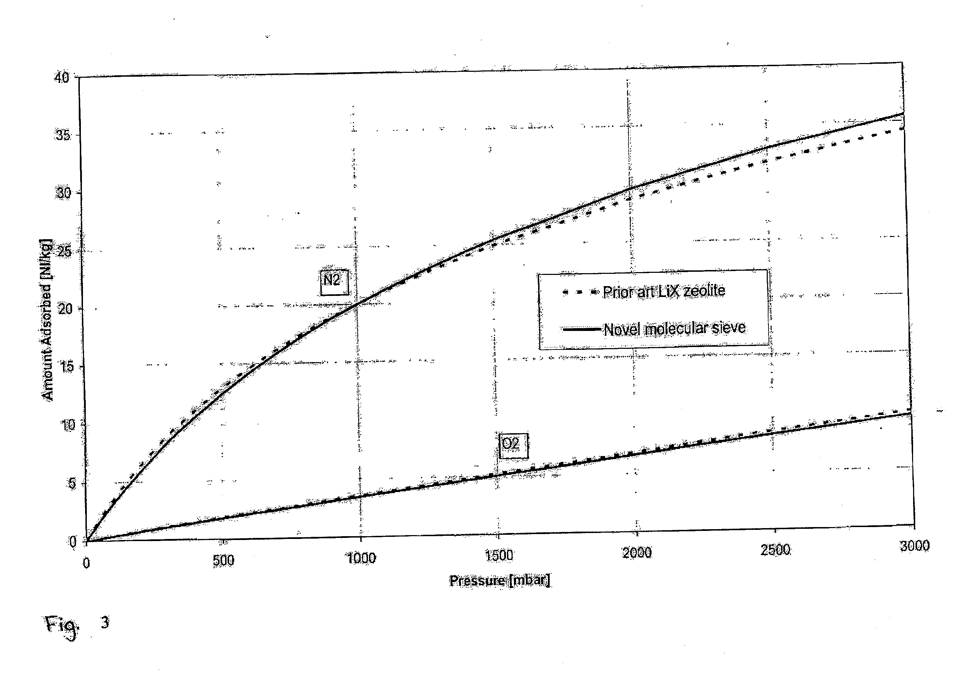

This Example represents the prior art, and is given for comparison with Example 3.
A prior art zeolite was incorporated into beads typical of those utilized in industrial applications as follows. 4.0 dry kilograms of the material produced according to Example 2 were mixed thoroughly with 1.0 kilogram of a conventional attapulgite binder for 1 hour. After adding the required quantity of water to induce granulation, the mixture was granulated using an intensive mixer to produce spherical beads of 1 to 4 millimeter diameter. The beads were activated by careful heating in a flow of 20,000 liters (STP) per hour of dry nitrogen at 550° C for 3 hours. Nitrogen working capacities of these materials are shown in Table 3. The nitrogen working capacity is defined as the difference in the amount of nitrogen adsorbed at 0.8 x adsorption pressure and the amount of nitrogen adsorbed at 0.8 x desorption pressure.
The regeneration of the adsorbent is a critical step in VPSA processes. A deep vacuum in the desorption step facilitates good regeneration, with a low nitrogen retention, and therefore a high available working capacity for the following adsorption step. However, a consequence of a deep vacuum is a high energy consumption. Figure 3 compares the nitrogen adsorption isotherms at 25° C for the adsorbent of the present invention and the prior art Li-LSX zeolite of Examples 3 and 4. It is clear that the novel material adsorbs more nitrogen at pressures above 1000 millibar, and less nitrogen at pressures below 1000 millibar. Thus, the slope of the adsorption versus applied pressure curve is greater for the novel material than for the prior art zeolite, at pressures above 1000 millibar. Thus, the nitrogen adsorption observed for the novel adsorbent does not decrease as rapidly with increasing pressure, as does that for the prior art Li-LSX zeolite. The novel adsorbent therefore provides superior performance in PSA processes with the adsorption at super-atmospheric pressures and regeneration at ambient pressure. Furthermore, it is not necessary in VPSA processes to reach such deep vacuum for the efficient regeneration of the novel adsorbent if the regeneration step were done at sub-atmospheric pressure.

Table 3

| Nitrogen Working Capacities for PSA Processes, expressed in normal liters per kilogram | | |
|---|---|---|
| Novel Adsorbent (Example 3) | Prior Art Zeolite (Example 4) | |
| Process at 3 bar | 12.64 | 12.23 |
| Process at 4 bar | 16.60 | 15.88 |

Table 3 provides a comparison of the nitrogen working capacity of the adsorbent from Example 3, made according to the present invention, and the prior art zeolite from Example 4, for PSA processes operating at 3 bar and 4 bar and 40° C. These values are derived from the adsorption isotherms of Figure 3. The novel adsorbent shows superior performance at 3 bar adsorption pressure and even greater advantage at 4 bar.
It will be apparent to those skilled in the art that the magnitude of these differences in the performance of the adsorbent of the present invention, as compared with the prior art zeolite are significant, and will have substantial benefit in commercial applications.

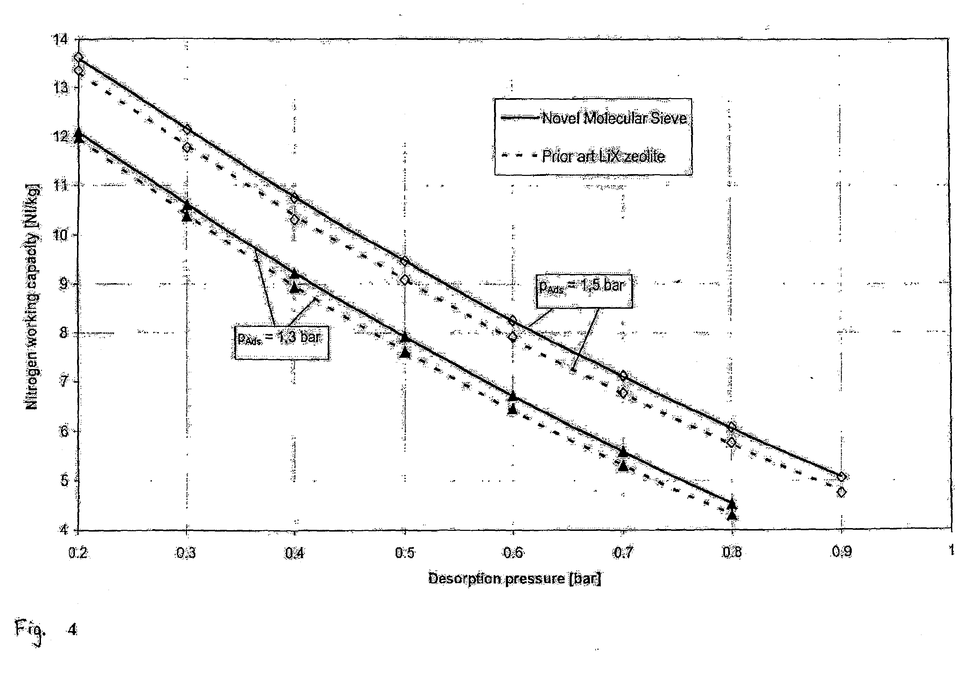

Figure 4 compares graphically the nitrogen working capacity for the adsorbent of the present invention as a function of the desorption pressure at 40° C. Adsorption pressures are 1.3 bar and 1.5 bar for the two examples depicted. The nitrogen working capacity is defined as the difference of the amount of nitrogen adsorbed at 0.8 x adsorption pressure and the amount of nitrogen adsorbed at 0.8 x desorption pressure. It is clear that the novel adsorbent provides a higher working capacity across the entire pressure range as compared to the prior art zeolite. Thus, the novel adsorbent provides superior performance for any given desorption pressure. The novel adsorbent has the further advantage that it does not require as deep a vacuum to achieve good regeneration if the system is operated at constant working capacity.

Overall, the resulting working capacity is higher for the novel adsorbent than for the prior art Li-LSX zeolite. At an adsorption pressure of 1.2 to 1.6 bar, and preferably 1.3 to 1.5 bar, an optimum desorption pressure in terms of energy consumption was found to be 360 to 490 millibar, and preferably 390-460 millibar. To reach the equivalent performance of a VPSA plant with a prior art Li-LSX zeolite, it would be necessary to decrease the regeneration pressure by an additional 30 millibar, which would require a substantially higher energy consumption. The advantages of using the novel adsorbent of the present invention for VPSA processes for air separation are most apparent when the feed temperature is in a preferred range of about 20-60° C.

Example 5

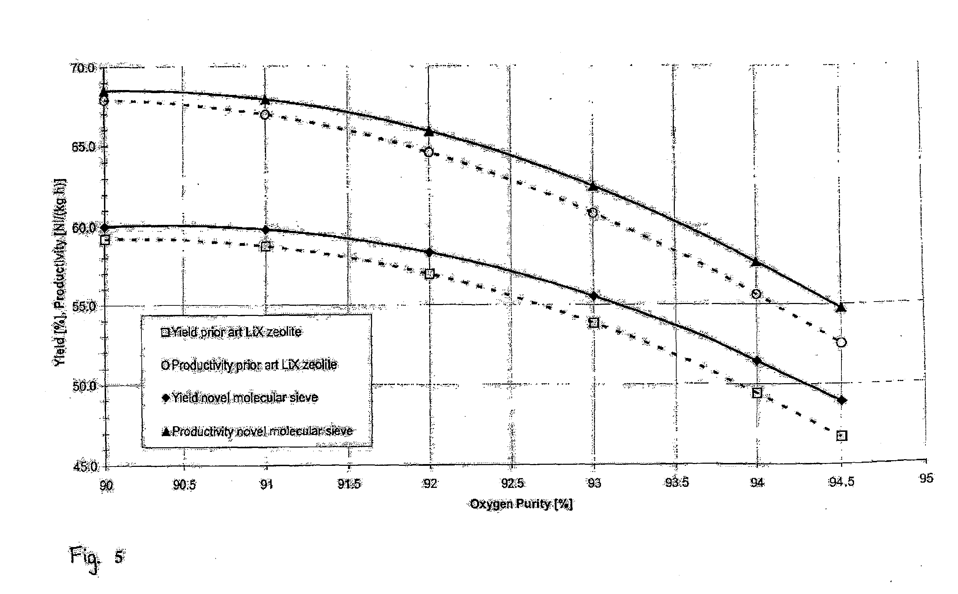

The beaded materials of Example 3 and 4 were tested for their performance in a VPSA pilot plant. The adsorption pressure was 1.3 bar, desorption pressure was 0.4 bar, and the cycle time was 26 seconds. The results are shown in Figure 5. These results were monitored by parallel simulation and data reduction studies. When determined at 92% oxygen purity, the data reduction showed an increase of 2.0% in Productivity and 2.5% in Yield using the novel adsorbent of the present invention. These large increases would result in significant cost reductions and/or product quality improvements in commercial installations.

The novel adsorbent of the present invention shows superior adsorption kinetics compared to a prior art Li-LSX molecular sieve. This results in a better Productivity and Yield, especially for a high product purity. It is therefore possible to use beads of the new adsorbent having an increased diameter compared to the prior art Li-LSX zeolite. The use of such bigger beads will result in a lower pressure drop across the industrial adsorber bed, thereby decreasing the energy consumption of the machinery, e.g. the air blower and the vacuum pump in a VPSA process. The faster adsorption kinetics of the novel adsorbent will also permit a reduced cycle time of the processes. And it is well known that shorter cycles lead will increase Productivity against unit pressure drop limitations. Due to the possibility of using bigger beads the higher pressure drop at shorter cycles can be overcome. Therefore use of the adsorbent of the present invention will lead to further reductions in specific energy consumption when applied in VPSA and PSA processes.

Example 6

This Example presents a calculation of the economic benefit achieved by the present invention.

An air stream is fed at a pressure of 1.3 bar into a VPSA plant with 2 adsorber vessels. Each adsorber bed contains 51,000 lbs. of the adsorbent described in this invention. The adsorber vessels are additionally filled with an appropriate amount of desiccant adsorbent in the bottom of the vessel in order to remove water and carbon dioxide from the feed air prior to flowing through the new adsorbent. The desorption pressure is 400 millibar and the time to complete a process cycle for one adsorber is 60 seconds. One process cycle consists of pressurization, production, pressure equalization, evacuation and purge. The production flow rate is 100 tons per day and the oxygen purity is 93.5%. The air consumed by the PSA plant is 21,700 $Nm^3$/h. The specific energy consumption is 0.30 kWh per $Nm^3$ of pure oxygen.

A VPSA plant, using the same amount of prior art Li-LSX zeolite and operated under the same conditions produces only 96.8 tons per day at an oxygen purity of 93.5% and an air consumption of 21,650 $Nm^3$/h. The specific energy consumption increases by 5% to 0.315 kWh per $Nm^3$ of pure oxygen product when the system is charged with the prior art zeolite. That means that the VPSA unit operating with the new adsorbent can produce 3.3% more enriched oxygen with the same amount of adsorbent and air utilized, with a 5% reduction in specific energy consumption. This considerable advantage in specific energy consumption, in addition to the pure benefit in recovery, is based on the more linear type of nitrogen isotherm of the new adsorbent as described in this invention if compared to prior art zeolite (Figure 3). This characteristic in combination with the enhanced diffusivity of the new adsorbent, leads to an easier release of nitrogen from the adsorbent to the vacuum pump, i.e. a steeper evacuation curve and therefore lower energy consumption.

The VPSA process with the new adsorbent described in this invention will produce 1170 tons per year more oxygen at 93.5% purity, and will save 123.5 MW per year. Overall, the plant will save approximately $88,000 in operating costs per year if a power cost of $0.05 per kWh and a product price of $0.10 per $Nm^3$ of oxygen are applied.

The reader skilled in the art will recognize that the invention may be modified, within the scope of the following claims.

**Claims**

1. A method of making a molecular sieve for use in separating components of a gas, **characterized by** reacting an ammonium exchanged low silica X-type zeolite precursor with a lithium cation at a pressure of about 200 millibar or less, and at a temperature of about 60° C or less.

2. A method according to Claim 1, wherein the lithium cation comprises lithium hydroxide.

3. A method according to Claim 2, wherein the lithium hydroxide is provided in an amount which is stoichiometrically equivalent to an amount of ammonium present.

4. A method according to any of Claims 1 to 3, wherein the zeolite precursor is selected to have a silicon to aluminum atomic ratio of less than about 1.02.

5. A method according to any of Claims 1 to 4, wherein the zeolite precursor is selected to be at least partially ammonium exchanged.

6. A method according to any of Claims 1 to 5, wherein the reacting step is performed for a time sufficient to achieve a substantially complete exchange of lithium ions for ammonium ions in the zeolite precursor.

7. A method of separating oxygen and nitrogen comprising passing a mixture including nitrogen and oxygen through an adsorption bed having a molecular sieve made according to the method of any of Claims 1 to 6.

8. A molecular sieve made according to the method of any of Claims 1 to 6.

9. A molecular sieve comprising an X-type zeolite material containing lithium ions, the sieve also including a non-zeolitic material, **characterized in that** the material exhibits an NMR spectrum having a first peak comprising a main signal and a second peak comprising a secondary signal corresponding to the non-zeolitic material, the secondary signal representing a shift of about 3 ppm relative to the main signal.

10. A molecular sieve according to Claim 10, wherein the zeolite material is ammonium-exchanged in that ammonium ions in the material have been exchanged with lithium ions, and wherein the zeolite material has a silicon to aluminum atomic ratio of less than about 1.02.

EP 1 486 254 A1

Fig. 1

Fig. 2

11

Fig. 3

Fig. 4

Fig. 5

**European Patent Office**

**EUROPEAN SEARCH REPORT**

Application Number

EP 04 07 6623

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | US 5 916 836 A (TOUFAR SIMONE ET AL) 29 June 1999 (1999-06-29) * claims 1,5,7,14,20; examples * | 1-10 | B01J20/18 B01D53/02 B01J29/08 C01B39/22 |
| D,X | US 6 407 025 B1 (BRANDT ALFONS ET AL) 18 June 2002 (2002-06-18) * claims 1,5,14,16,18; examples * * column 1, line 61 - line 64 * * column 2, line 49 - line 52 * * column 6, line 47 - line 51 * | 1-10 | |
| A | US 2002/072468 A1 (FITCH FRANK R ET AL) 13 June 2002 (2002-06-13) * the whole document * | 1-10 | |

TECHNICAL FIELDS SEARCHED (Int.Cl.7)

B01J
B01D
C01B

The present search report has been drawn up for all claims

| Place of search | Date of completion of the search | Examiner |
|---|---|---|
| Munich | 3 September 2004 | Schoofs, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 07 6623

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2004

| Patent document cited in search report | | Publication date | Patent family member(s) | | Publication date |
|---|---|---|---|---|---|
| US 5916836 | A | 29-06-1999 | AU | 732354 B2 | 26-04-2001 |
| | | | AU | 4833497 A | 02-07-1998 |
| | | | CA | 2223387 A1 | 27-06-1998 |
| | | | CN | 1196976 A ,B | 28-10-1998 |
| | | | DE | 69715578 D1 | 24-10-2002 |
| | | | DE | 69715578 T2 | 31-07-2003 |
| | | | EP | 0850877 A1 | 01-07-1998 |
| | | | JP | 10218617 A | 18-08-1998 |
| | | | KR | 253962 B1 | 01-08-2000 |
| | | | RU | 2217233 C2 | 27-11-2003 |
| | | | SG | 60175 A1 | 22-02-1999 |
| | | | TW | 386981 B | 11-04-2000 |
| US 6407025 | B1 | 18-06-2002 | CA | 2332706 A1 | 10-08-2001 |
| | | | EP | 1123897 A1 | 16-08-2001 |
| | | | JP | 2001240410 A | 04-09-2001 |
| US 2002072468 | A1 | 13-06-2002 | EP | 1125892 A2 | 22-08-2001 |

EPO FORM P0459

For more details about this annex : see Official Journal of the European Patent Office, No. 12/82